# EUROPEAN PATENT SPECIFICATION

(11) **EP 3 471 656 B1**
(45) Date of publication and mention of the grant of the patent: **16.06.2021**
(21) Application number: 16736311.8
(22) Date of filing: 20.06.2016
(51) Int. Cl.: A61C 13/00, G06T 19/00, G06T 19/20, A61C 9/00

(54) **DENTAL RESTORATION ASSESSMENT AND MANUFACTURING USING VIRTUAL MODEL**
BEURTEILUNG UND HERSTELLUNG EINES ZAHNERSATZES UNTER VERWENDUNG EINES VIRTUELLEN MODELLS
ÉVALUATION ET FABRICATION D'UNE RESTAURATION DENTAIRE EN UTILISANT UN MODÈLE VIRTUEL

(43) Date of publication of application: 24.04.2019
(73) Proprietor: Carestream Dental Technology Topco Limited, London SW1Y 6RJ (GB)
(72) Inventor: INGLESE, Jean-marc, Rochester NY 14608 (US); BARNEOUD, Julien, D., Rochester NY 14608 (US); RIPOCHE, Xavier, Rochester NY 14608 (US); SHELLARD, Edward, R., Rochester NY 14608 (US)
(74) Representative: Schmidbauer, Andreas Konrad
(86) International application number: PCT/US2016/038294
(87) International publication number: WO 2017/222497

(56) References cited:
- WO-A1-2015/123759
- US-A1- 2015 350 517
- CHEN QIAO ET AL: "An augmented reality based teeth shade matching system", PROCEEDINGS VRCAI. ACM SIGGRAPH INTERNATIONAL CONFERENCE ONVIRTUAL REALITY CONTINUUM AND ITS APPLICATIONS IN INDUSTRY (VRCAI), 11 December 2011 (2011-12-11), - 12 December 2011 (2011-12-12), page 371, XP055348190, Hong Kong DOI: 10.1145/2087756.2087818 ISBN: 978-1-4503-1060-4

## Description

### FIELD OF THE INVENTION

The invention relates generally to the field of dental imaging and more particularly relates to methods for using imaging and visualization for preparing a dental restoration, such as a crown or other prosthetic device.

### BACKGROUND

Conventionally, dental crowns are custom-fabricated according to an impression from the patient, obtained by the dental practitioner. Traditionally, all-ceramic restorations are fabricated off site in a dental laboratory, such as using feldspathic porcelains, pressed ceramics, or other suitable materials. This indirect method of fabrication can yield quite satisfactory results where there is good communication between the laboratory and the dentist. Increasingly, computer-aided design/computer-aided manufacturing (CAD/CAM) technology is being used to fabricate crowns, using a milling machine directed by computer software to shape the crown out of a suitable material, such as metal or ceramic; the crown may subsequently be coated with porcelain to achieve the desired color and finish.

The preparation of crowns and related dental prostheses can be time consuming, costly, and frustrating for the patient as well as for the practitioner. Multiple visits to the dental practitioner are required for obtaining the needed impression, preparing the tooth surface and, in some cases, the mounting post, and installing a provisional or temporary crown, checking the fit and appearance of the final crown, and its installation. In an appreciable percentage of cases, the crown initially prepared by the laboratory is not acceptable, either for fit or appearance, and needs to be sent back to the lab for rework or fabrication of another crown.

Thus, it can be appreciated that improvements are needed to help to reduce the need for rework of crowns and related prosthetics and, where possible, to eliminate the need for return visits to the dental practitioner for final checks of crown aesthetics and fit.

Attention is drawn to US 2015 350 517 A1 disclosing a device for visualizing the interior of a patient's mouth. The device includes a camera for taking an optical imprint of organs arranged in the mouth and augmented reality glasses having an optical glass through which a user of the glasses sees the inside of the mouth, and a visualization camera taking an image of what the user sees through the optical glass. First images corresponding to those taken by the visualization camera are correlated with second images corresponding to those taken by the camera for taking an optical imprint, whereby the second images are projected onto the optical glass.

### SUMMARY

In accordance with the present invention, a method for fabricating a dental restoration for a tooth site in dentition as set forth in Claim 1 is provided. Preferred embodiments of the invention are inter alia claimed in the dependent claims. Exemplary embodiments of the application address the need for improved preparation and visualization of crowns and other dental restorations. An object of the application is to describe methods and/or apparatus that use imaging tools to obtain and display video or volume images of the patient's mouth along with image content that shows the overall appearance of the dental restoration. The patient preferably controls viewing of a virtual dental restoration in the patient's mouth. An advantage of this approach is the potential reduction of expensive and time-consuming rework for preparation and approval of the dental restoration prior to its mounting within the patient's mouth. In certain exemplary embodiments, an ability to approve the dental restoration is in a live video of the dental restoration site controlled by the patient while a candidate virtual dental restoration is registered to the dental restoration site.

Another aspect of this application is to address, in whole or in part, at least the foregoing and other deficiencies in the related art.

It is another aspect of this application to provide, in whole or in part, at least the advantages described herein.

These objects are given only by way of illustrative example, and such objects may be exemplary of one or more embodiments of the invention. Other desirable objectives and advantages inherently achieved by the may occur or become apparent to those skilled in the art. The invention is defined by the appended claims.

### BRIEF DESCRIPTION OF THE DRAWINGS

The foregoing and other objects, features, and advantages of the invention will be apparent from the following more particular description of the embodiments of the invention, as illustrated in the accompanying drawings. The elements of the drawings are not necessarily to scale relative to each other.
Figure 1 is a logic flow diagram that shows steps for conventional crown preparation.
Figure 2 is a schematic block diagram that shows an apparatus for preparation and fitting of a dental restoration.
Figure 3 is a logic flow diagram showing crown preparation using volume image data and manipulation according to example that is not part of the present invention.
Figure 4 shows a display screen that provides an operator interface for viewing and manipulating a restoration using virtual images.
Figure 5A shows a perspective view of a milling machine.
Figure 5B shows a partially exploded view of the milling machine.
Figure 6 is a logic flow diagram showing assessment of a dental restoration according to an exemplary embodiment of the application.
Figure 7 is diagram of an exemplary device allowing patient controlled assessment of a dental restoration using augmented reality according to the application.

### DESCRIPTION OF EXEMPLARY EMBODIMENTS

The following is a detailed description of exemplary embodiments, reference being made to the drawings in which the same reference numerals identify the same elements of structure in each of the several figures.

Where they are used, the terms "first", "second", "third", and so on, do not necessarily denote any ordinal or priority relation, but may be used for more clearly distinguishing one element or time interval from another.

The term "exemplary" indicates that the description is used as an example, rather than implying that it is an ideal. The terms "subject" and "object" may be used interchangeably to identify the object of an optical apparatus or the subject of an image.

The term "in signal communication" as used in the application means that two or more devices and/or components are capable of communicating with each other via signals that travel over some type of signal path. Signal communication may be wired or wireless. The signals may be communication, power, data, or energy signals which may communicate information, power, and/or energy from a first device and/or component to a second device and/or component along a signal path between the first device and/or component and second device and/or component. The signal paths may include physical, electrical, magnetic, electromagnetic, optical, wired, and/or wireless connections between the first device and/or component and second device and/or component. The signal paths may also include additional devices and/or components between the first device and/or component and second device and/or component.

In the context of the present disclosure, the terms "pixel" and "voxel" may be used interchangeably to describe an individual digital image data element, that is, a single value representing a measured image signal intensity. Conventionally an individual digital image data element is referred to as a voxel for 3-dimensional or volume images and a pixel for 2-dimensional (2-D) images. For the purposes of the description herein, the terms voxel and pixel can generally be considered equivalent, describing an image elemental datum that is capable of having a range of numerical values. Voxels and pixels have attributes of both spatial location and image data code value.

In the context of the present disclosure, the terms "viewer", "operator", and "user" are considered to be equivalent and refer to the viewing practitioner or other person who views and manipulates an image, such as a dental image, on a display monitor. An "operator instruction", "practitioner instruction", or "viewer instruction" is obtained from explicit commands entered by the viewer, such as using a computer mouse or touch screen or keyboard entry.

In the context of the present disclosure, the terms "virtual view" and "virtual image" are used to connote computer-generated or computer-processed images that are displayed to the viewer. The virtual image that is generated can be formed, for example, by an optical system using a number of well-known techniques and this virtual image can be formed by the display optics using convergence or divergence of light. A magnifying glass, as a simple example, provides a virtual image of its object. A virtual image is not formed on a display surface but the virtual image gives the appearance of an actual object at a position in the field of view; the object is not actually at that position. With a virtual image, the apparent image size is independent of the size or location of a display surface. In contrast to systems that project a real image on a screen or display surface, a realistic viewing experience still can be provided by forming a virtual image (e.g., by augmented reality). The virtual image can appear to be some distance away and appears, to be superimposed onto or against real-world objects in the field of view (FOV) of the image or video.

In the context of the present disclosure, an image is considered to be "in register" with a subject that is in the field of view when the image and subject are visually aligned from the perspective of the sensor, camera or observer. As the term "registered" is used in the current disclosure, a registered feature of a computer-generated or virtual image is sized, positioned, and oriented on the display so that its appearance represents the planned or intended size, position, and orientation for the corresponding object, correlated to the field of view. Registration is in three dimensions, so that, from the field of view perspective of a dental practitioner/observer, the registered feature is rendered at the position and angular orientation that is appropriate and within the visual field of the observing practitioner. The relative opacity of superimposed content and/or registered virtual content can be modulated to allow ease of visibility of both the real-world view and the virtual image content that is superimposed thereon. In addition, because the virtual image content can be digitally generated, the superimposed content and/or registered content can be removed or its appearance changed in order to provide improved visibility of the real-world scene in the field of view or in order to provide various types of information to the practitioner. For example, the real-world view can be intermittently displayed with superimposed content and/or registered virtual content thereon.

In the context of the present disclosure, the term "real-time image" refers to an image that is actively acquired from the patient or displayed during a procedure in such a way that the image reflects the actual status of the procedure with no more than a few seconds' lag time, with imaging system response time as the primary factor in determining lag time.

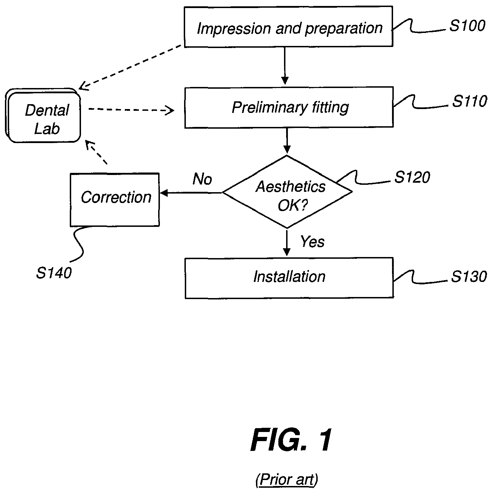

Exemplary method and/or apparatus embodiments of the application address the need for improved crown preparation for a tooth site, particularly with respect to improved ways for assessing fit and appearance, e.g., by the patient, prior to crown fabrication. In order to more fully understand innovative aspects of the application, it is instructive to review the overall sequence for crown preparation and positioning, as outlined in the flow diagram of Figure 1. In an impression and preparation step S100, the dental practitioner obtains an impression that includes at least the tooth site for the affected tooth and its neighboring teeth. The practitioner also performs the needed procedures to clean and prepare the tooth site so that it is capable of accepting and supporting the crown. As part of this initial process, a temporary or provisional crown is generally provided, formed at the site using curable resins and related materials. The impression is provided to an outside lab as the guide to preparation of the crown.

From several days to a few weeks later, a preliminary fitting step S110 is executed. In this step, the dental practitioner removes the provisional crown and seats the lab-fabricated crown or permanent crown in its place at the tooth site. In a checking step S120, the practitioner checks the fit of the fabricated crown for function and aesthetics. Factors such as taper, margin, ferrule effect, and seal are considered. Aesthetics, both for color and overall shape, are particularly important for teeth that are more generally visible, such as canines, incisors, and first molars. Thus, for these teeth, the practitioner is generally more concerned with patient appearance and approval of the crown. Generally, for rear teeth, such as wisdom teeth for example, color and overall appearance are less of a concern.

Where the fabricated crown is acceptable to dentist and patient, the practitioner installs the crown at the tooth site in an installation step S 130. Where the crown is not acceptable, due to either or both functional and aesthetic considerations, a correction step S140 executes, in which the practitioner requests rework from the outside lab. The process then repeats through steps S I 10 and S120 until the patient and practitioner are satisfied with results. Unfortunately, the repeated portion of this process can be required multiple times, particularly for teeth that are highly visible. This can be time-consuming, costly, and frustrating for the patient, the practitioner, and the lab as well.

In an alternative conventional overall sequence for crown preparation and positioning, CAD/CAM crown generation can shorten the cycle time considerably, since the crown is fabricated on site, preferably while the patient waits. This conventional sequence can eliminate a second trip by the patient to the practitioner and/or reduce the time between step S100 and step S110. However, proper fabrication with CAD/CAM equipment requires that the practitioner provide the precise information needed; otherwise, time and money are wasted with fabrication of unacceptable prostheses.

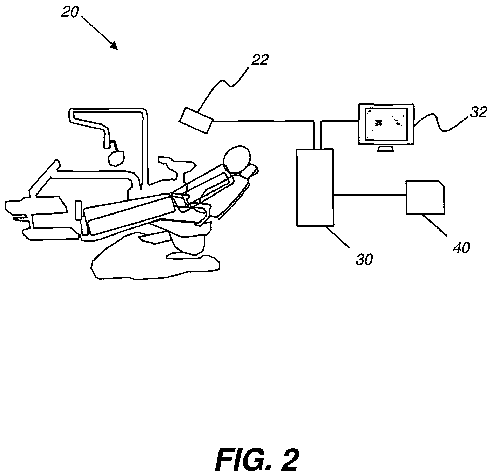

The schematic block diagram of Figure 2 shows apparatus for dental restoration preparation and assessment according to an exemplary embodiment of the application. An imaging apparatus 20 has an intra-oral camera 22 for obtaining images of the patient's mouth. Advantageously, the image data that is accessed includes both volume image content, such as from contour imaging, and color shade information. A host processor 30 stores and processes the obtained image data. A display monitor 32 is in signal communication with processor 30 for display of processed image data and for providing an interface for operator commands. Processor 30 is also in signal communication with a milling machine 40, a device that is used to form the crown or other prosthesis according to information from imaging apparatus 20 and from practitioner instructions. Milling machine 40 operates according to numerical control (NC) instructions generated from processor 30 according to practitioner instructions for reshaping and adjusting tooth shape and positioning.

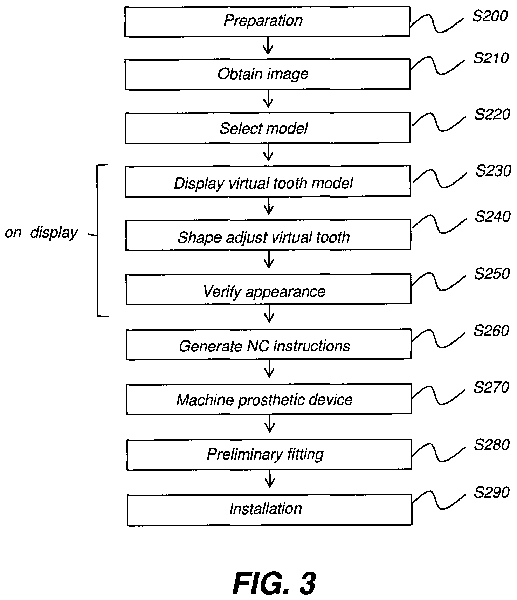

The logic flow diagram of Figure 3 shows an unclaimed method useful for understanding the invention and used for preparation and assessment of a dental restoration. In a preparation step S200, the dental practitioner performs the needed tasks for preparation for the restoration site. An imaging step S210 then obtains the multiple images needed in order to generate volume data for the patient's mouth. In this step, the dental practitioner can use an intra-oral camera 22 (Figure 2) to scan the affected area of the patient's mouth and obtain surface contour and color information for the affected tooth site and neighboring teeth. Volume image data collection and generation is known in the dental imaging arts and can be performed in a number of ways. Contour imaging using projected light patterns for obtaining surface structure information can be performed in a number of ways. Once the 3-D information is obtained, a model selection step S220 then enables the selection of an appropriate model for the affected tooth. A set of model teeth is available to the practitioner for each affected tooth, according to variable factors such as tooth number, size, overall shape and appearance, dimensional information, and other data.

Continuing with the logic flow of Figure 3, steps S230, S240, and S250 allow the practitioner and the patient to visualize and adjust the appearance of the dental restoration as it would appear at the tooth site on display monitor 32. These steps can be repeated, as needed, any number of times in order to achieve a suitable representation of the dental restoration that is to be fabricated. In display step S230, a volume image is represented on display monitor 32, with the selected model tooth shown in place as a "virtual" tooth for practitioner and patient viewing. A shape adjustment step S240 then allows interactive adjustment of tooth angle, positioning, and shape. For executing this step, the dental practitioner is provided with various on-line tools for interaction to adjust the shape and spatial characteristics of the virtual tooth. This includes automated utilities that reshape the virtual tooth using factors such as relative size of neighboring teeth, boundary dimensions guidelines, tooth height calculations, shaping and position along the mandibular or maxillary arch, axes of rotation, and other factors. Still other utilities enable the dental practitioner to adjust one or more spatial coordinates, such as to achieve an appearance that better suits the shape and structure of the patient's mouth. Once the shape appears to be satisfactory, color adjustment step S250 is executed. For this step, display monitor 32 shows the virtual tooth with its approximate color, along with the color of neighboring teeth. Color data from neighboring teeth is used to provide a starting color for the tooth. Color shade controls are provided to allow the practitioner to adjust the display and show the patient how the teeth would appear with adjustments to its color treatment.

Following patient and practitioner approval, an instructions generation step S260 is executed, generating the numerical control (NC) instructions that are used by milling machine 40 to machine the tooth. In a machining step S270, the crown or other restoration is machined on machine 40. The fit of the restoration is checked by the practitioner in a preliminary fitting step S280. If the fit is not satisfactory, rework is performed, which may include repeating one or more of steps S230, S240, S250, S260, and S270. Color is also checked. For aesthetic teeth, the fabricated crown may then be matched with a glaze for final preparation by a dental lab. The crown is then installed in the patient's mouth in an installation step S290.

The machined crown is typically formed of a machinable ceramic material. Alternately, the crown can be formed from a metallic material that is coated with a glaze for final appearance.

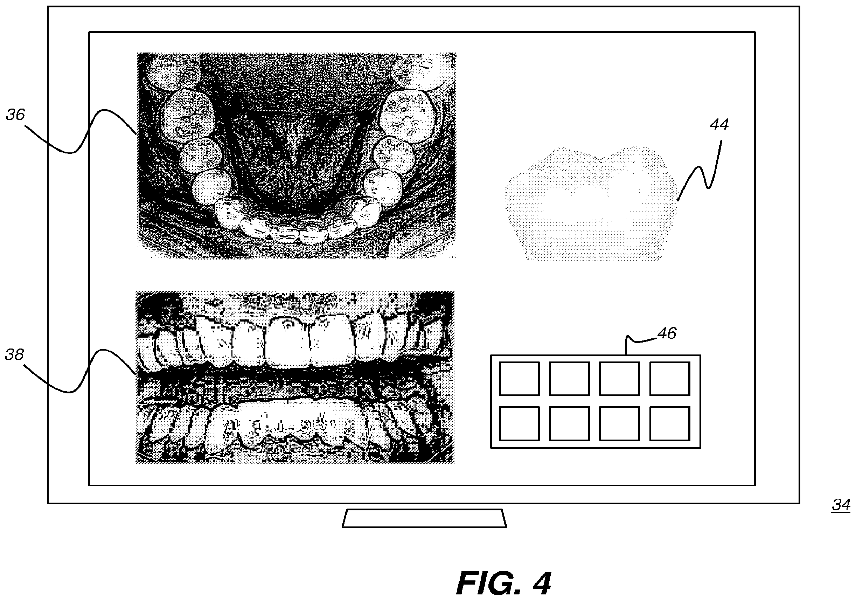

Figure 4 shows a display screen 34 that provides an operator interface for viewing and manipulating a restoration using virtual images. Top and front views 36 and 38 show a crown as it would appear in position, along with neighboring teeth. A virtual crown 44 is shown in an enlarged view, which can be rotated and shown at any suitable perspective for practitioner inspection and manipulation. A set of controls 46 is provided for practitioner entry of various instructions for altering the positioning, shape and/or color of the displayed crown 44. Controls 46 can include a scale control for adjusting size along any coordinate axis, a flattening tool for incrementally adjusting surface curvature or protrusion of the tooth or crown, a removal tool for removing material from the shape of the tooth or crown, tools for building up surface area, and tools for movement or rotation along a selected axis, for example.

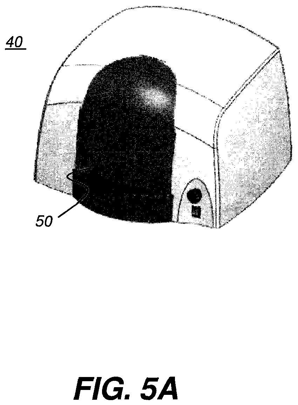

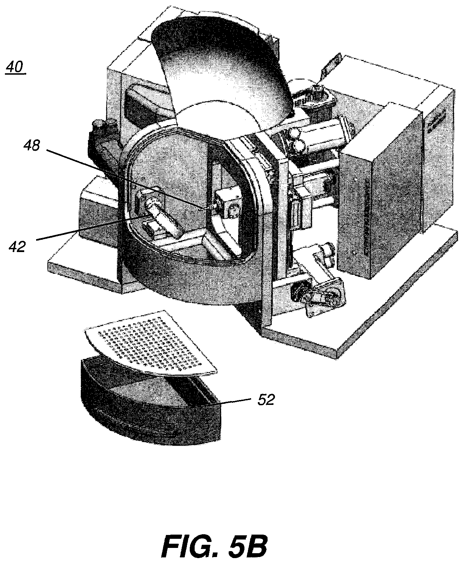

Figures 5A and 5B show perspective and partially exploded views of milling machine 40. Beneath a protective cover 50, a tool 48 fashions the workpiece that is held in a holder 42. A tray 52 captures spent material from the tooling process.

Embodiments of the present invention take advantage of capabilities of advanced intraoral cameras that are capable of capturing not only color information, but also contour patterning. To support these different functions, camera 22 (Figure 2) provides illumination of multiple types during image capture. Color information is obtained using white light illumination, or using some combination with multiple colored illuminations sources, such as red, green, and blue light sources, for example. Pattern projection is performed using some type of light modulator with appropriate illumination for obtaining tooth contour information for processing. Processor 30 obtains, stores, and processes the different types of information necessary for generation of volume or 3-D intraoral images. The virtual image that is provided for the crown or other restoration is then generated to be compatible with image content for neighboring teeth of the patient.

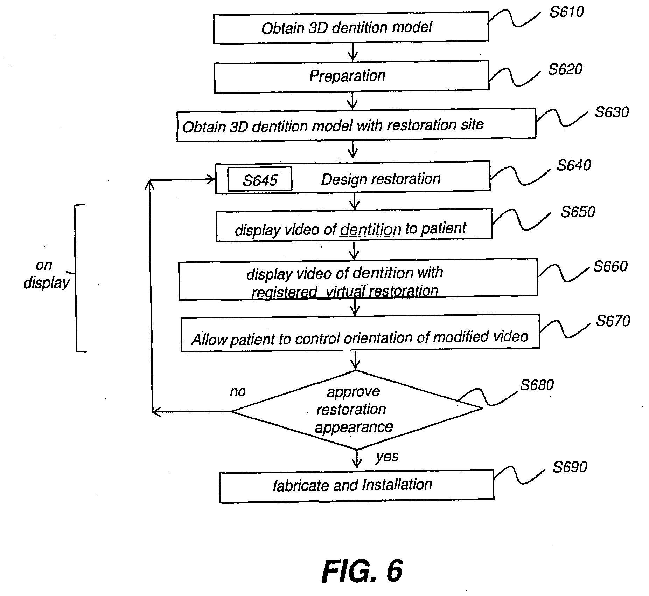

The logic flow diagram of Figure 6 shows a method used for preparation and/or assessment of a dental restoration according to an exemplary embodiment of the application. An imaging step S610 can obtain the multiple images needed in order to generate volume data for the patient's mouth. Volume image data collection and generation is known in the dental imaging arts and can be performed in a number of ways by an intra-oral camera or the like. Thus, in step S610 for example, the dental practitioner can use an intra-oral camera 22 (Figure 2) to scan the affected area of the patient's mouth and obtain surface contour and color information for the affected tooth site and neighboring teeth. In a preparation step S620, the dental practitioner performs the needed tasks for preparation for the restoration site. In one exemplary embodiment, more than one restoration site can be prepared. An imaging step S630 then obtains the multiple images needed in order to generate volume data for at least the restoration site in the patient's mouth. In this step, again the dental practitioner can use an intra-oral camera 22 (Figure 2) or other conventional volume imaging techniques. Alternatively, steps S610 and S630 can be performed using conventional physical impressions.

Continuing with the logic flow of Figure 6, in step S640, the practitioner or a laboratory can design the restoration using both (e.g., the differences) between the initial volume image (e.g., 3D surface model) of the dentition and the restoration site volume image, known restoration requirements (e.g., thickness, minimum dimensions, etc.), and known anatomical requirements (e.g., tooth angles, minimum clearances, etc.). Additional factors can be considered when designing the dental restoration. A proposed dental restoration can provided to the practitioner in standard data formats for virtual modeling and later fabrication. In certain exempalry embodiments, the proposed dental restoration can also include color or shade information.

An optional step, S645, can allow the practitioner interactive adjustment of tooth angle, positioning, shape and/or color of the proposed dental restoration. For executing this step, the dental practitioner can be provided with various on-line tools for interaction to adjust the shape, spatial and/or color characteristics of the proposed dental restoration (e.g., virtual tooth). This includes automated utilities that reshape the virtual tooth using factors such as relative size of neighboring teeth, boundary dimensions guidelines, tooth height calculations, shaping and position along the mandibular or maxillary arch, axes of rotation, and other factors. Still other utilities enable the dental practitioner to adjust one or more spatial coordinates, such as to achieve an appearance that better suits the shape and structure of the patient's mouth. Still other utilities enable the dental practitioner to adjust color of the restoration.

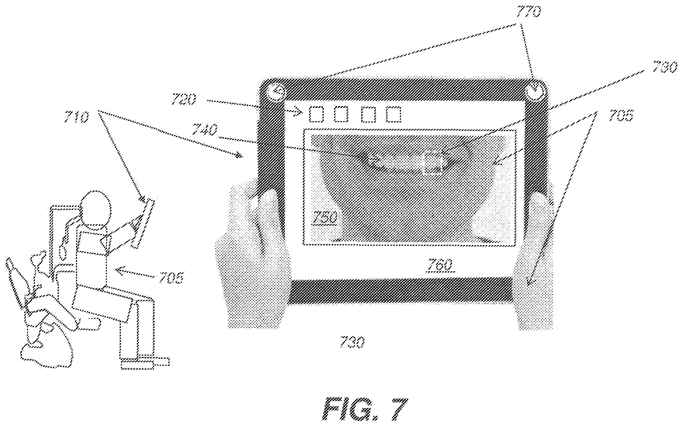

Once the proposed dental restoration appears to be satisfactory, the patient's dentition can be shown to the patient in step S650. Preferably, a handheld device 710 can be used to display a video or the like. Exemplary apparatus for displaying the live video of the patient's dentition can include but are not limited to portable computers, smart monitor, handheld camera, smart phones, tablets, smartpads or modified video devices. Figure 7 is diagram of an exemplary embodiment of a device allowing patient controlled assessment of a dental restoration using augmented reality according to the application.

In step S660, at least one control of operator controls 720 allows a patient 705 to select virtual video of the patient's dentition with a virtual proposed dental restoration 730 registered to the restoration preparation site. Thus, in step S660, the device 710 can provide real-time modification of the displayed real-time video of the dentition including the prepared restoration site to show the virtual proposed dental restoration 730 registered to physical teeth 740 in the real-time video of dentition to replace the prepared restoration site in the modified displayed real-time video of the dentition 750 displayed in a display surface 760 of the device 710. Registration of the virtual proposed dental restoration to the real time video of the dentition can include providing the virtual proposed dental restoration at an actual tooth surface as seen from the camera's field of view and displayed in the camera's field of view at the position, size and orientation of the actual tooth surface. Preferably, in step S670 the virtual video 750 including the proposed dental restoration is in the control of the patient 705 and is updated in real time as the patient moves and/or re-orients the device 710 showing the video relative to the patient's dentition/prepared restoration site. In an alternative exemplary embodiment, the video displaying device can be fixed but allow the patient 705 to move (e.g., under patient control) within a Field of View of the device 710 while provide real-time modification of the displayed real-time video of the dentition to display the proposed restoration registered to the displayed physical teeth from the changing orientation of the video displaying device 710.

Continuing with the logic flow of Figure 6, in steps S680, the patient can approve or disapprove the proposed dental restoration (e.g., based on step S660 or based on real time video evaluation of the proposed dental restoration virtually presented in the patient's mouth). If the decision in step S680 is positive, in step S690 a milling machine or the like can prepare the proposed dental restoration. In one exemplary embodiment, the milling machine or the like can prepare a proposed shade-matched dental restoration. If the decision in step S680 is negative, control can return to step S640. As disclosed herein, these steps can be repeated, as needed, any number of times in order to achieve a suitable representation of the dental restoration that is to be fabricated and installed.

According to some exemplary embodiments, combination of the virtual dental restoration 3D image with the image content (e.g., video or still) for a given FOV can include a process of:
(i) Reconstructing the camera 770 volume image data to provide a 3-D view.
(ii) Determining the FOV of the 3-D view based on camera information from the device 710. Then, determining whether or not a treatment region lies within the FOV. If not, augmented reality is not performed until the FOV includes the treatment region. If yes,
(iii) Modifying the camera reconstruction according to virtual dental restoration data replacing the treatment region.
(iv) Displaying results in a display. In certain cases, this can include, for example, modifying registered virtual dental restoration data voxels, such as intermittently showing the virtual dental restoration in the camera reconstruction

In one exemplary embodiment, real-time modifying the displayed real-time video of the dentition can include placing a virtual model of the at least one dental restoration in the displayed real-time video of the dentition using an augmented reality CAD/CAM algorithm. Registration with the field of view can be performed in a number of conventional ways. Methods for registration of a computer-generated image to its real-world counterpart known to those skilled in the arts, include for example, the use of object and shape recognition for teeth or other features. In certain exemplary embodiments, for augmented reality video display; one, two, or more cameras (e.g., first and second camera 770) in signal communication to the device 710 can form a combined 3D (e.g., stereoscopic) virtual image, images or video to be displayed to the patient/practitioner, for example; generated from the field of view of the device 710. Again, the virtual model of the at least one dental restoration in the displayed real-time video of the dentition can replace the dental restoration site in the augmented reality video.

In one exemplary embodiment, an intra-oral camera with video capability and augmented reality capability can provide the augmented reality by real-time modification of the displayed real-time video of the dentition including the prepared restoration site to show the virtual proposed dental restoration 730 registered to physical teeth 740 to replace the prepared restoration site in the modified displayed real-time video of the dentition 750.

Certain conventional augmented reality CAD/CAM systems and related techniques for combined image content can provide registration with the field of view using fiducial markers of some type, positioned on the patient's skin or attached to adjacent teeth, a restoration site or nearby structures. Fiducial markers are then used as guides for updating the volume image content. There are drawbacks with this type of approach, however, including obstruction or poor visibility, added time and materials needed for mounting the fiducial markers or patient discomfort, and other difficulties. Other conventional augmented reality techniques that can implement embodiments herein include HMD devices and related wearable devices that have cameras, sensors, and other integrated components are known in the art and are described, for example, in US 6 091 546 A to Spitzer et al.; US 8 582 209 B1 to Amirparviz; US 8 576 276 B2 to Bar-Zeev et al.; and in US 2013 038 510 A1 to Brin et al. HMD devices are capable of superimposing image content onto the field of view of the wearer, so that virtual or computer-generated image content appears to the viewer along with the real-world object that lies in the field of view, such as a tooth or other anatomy.

In one exemplary embodiment, the device 710 can allow color or shade modification of the virtual proposed dental restoration while the modified displayed real-time video of the dentition 750 including the virtual proposed dental restoration is being displayed to the patient 705. Such real-time color modification can be performed by the practitioner, the patient or other operator.

According to the disclosure of the application, a computer program has stored instructions that process image data accessed from an electronic memory in accordance with method and/or apparatus embodiments described. As can be appreciated by those skilled in the image processing arts, a computer program according to the disclosure of the application can be utilized by a suitable, general-purpose computer system, such as a personal computer or workstation. However, many other types of computer systems can be used to execute the computer program of the present disclosure, including networked processors. The computer program for performing embodiments of the application may be stored in a computer readable storage medium. This medium may comprise, for example; magnetic storage media such as a magnetic disk (such as a hard drive) or magnetic tape; optical storage media such as an optical disc, optical tape, or machine readable bar code; solid state electronic storage devices such as random access memory (RAM), or read only memory (ROM); or any other physical device or medium employed to store a computer program. The computer program for performing embodiments of the application may also be stored on computer readable storage medium that is connected to the image processor by way of the internet or other communication medium. Those skilled in the art will readily recognize that the equivalent of such a computer program product may also be constructed in hardware.

It will be understood that the computer program product of the application may make use of various image manipulation algorithms and processes that are well known. It will be further understood that the computer program product disclosed in the application may embody algorithms and processes not specifically shown or described herein that are useful for implementation. Such algorithms and processes may include conventional utilities that are within the ordinary skill of the image processing arts. Additional aspects of such algorithms and systems, and hardware and/or software for producing and otherwise processing the images or cooperating with the computer program product, are not specifically shown or described herein and may be selected from such algorithms, systems, hardware, components and elements known in the art.

Certain exemplary method and/or apparatus disclosed in the application can provide the patient (themselves) looking at themselves on live video with a virtual model of a restoration (e.g., crown, bridge) being virtually placed in the live video to replace an actual prepared surface/tooth to make an augmented reality live video for evaluation and/or approval of the restoration by the patient before fabrication of the restoration by the dentist. Exemplary embodiments according to the application can include various features described herein (individually or in combination).

While the invention has been illustrated with respect to one or more implementations, alterations and/or modifications can be made to the illustrated examples without departing from the scope of the appended claims. In addition, while a particular feature of the invention can have been disclosed with respect to only one of several implementations/embodiments, such feature can be combined with one or more other features of the other implementations/embodiments as can be desired and advantageous for any given or particular function. The term "at least one of" is used to mean one or more of the listed items can be selected. The term "about" indicates that the value listed can be somewhat altered, as long as the alteration does not result in nonconformance of the process or structure to the illustrated embodiment. Finally, "exemplary" indicates the description is used as an example, rather than implying that it is an ideal. Other embodiments of the invention will be apparent to those skilled in the art from consideration of the specification and practice of the invention disclosed herein. It is intended that the specification and examples be considered as exemplary only, with a scope of the invention being indicated by the following claims.

## Claims

1. A method for fabricating a dental restoration for a tooth site in dentition, the method executed at least in part on a computer and comprising:
a) obtaining (S610, S620, S630) a 3D model of at least a portion of dentition including at least one prepared restoration site for at least one selected tooth;
b) designing (S640) at least one dental restoration for the at least one prepared restoration site of the dentition using the 3D model based on CAD/CAM techniques;
c) displaying (S650) real-time video of the dentition including the at least one prepared restoration site, an orientation of the prepared restoration site being controlled by a patient;
d) real-time modifying (S660) the displayed real-time video of the dentition including the at least one prepared restoration site to show the at least one dental restoration registered to physical teeth in the real-time video of the dentition to replace the at least one prepared restoration site in the modified displayed real-time video of the dentition;
e) evaluating (S680) an appearance of the at least one dental restoration registered to physical teeth in the modified displayed real-time video of the dentition; and
f) fabricating (S690) the displayed dental restoration according to generated program instructions for machine fabrication when the evaluation is positive.

2. The method of claim 1, wherein the evaluation is made by the patient (S670).

3. The method of claim 1, further comprising
reshaping (S640) the displayed dental restoration according to one or more operator instructions when the evaluation is negative; and
repeating steps c) through f).

4. The method of claim 1, wherein when the orientation of the displayed real-time video of the dentition changes, the appearance of the at least one dental restoration registered to physical teeth in the real-time video of the dentition is changed to match.

5. The method of claim 1, wherein real-time modifying (S660) the displayed real-time video of the dentition comprises placing a virtual model of the at least one dental restoration in the displayed real-time video of the dentition using an augmented reality CAD/CAM algorithm.

6. The method of claim 1, wherein displaying (S650) real-time video of the dentition including the at least one prepared restoration site comprises using at least one camera to film the dentition and a monitor to display the modified displayed real-time video of the dentition, wherein a handheld personal computing device comprises the at least one camera and the monitor, wherein the handheld personal computing device comprises a portable computer, a smartphone, a smart computing device or a tablet.

7. The method of claim 6, wherein the appearance of the at least one dental restoration registered to physical teeth in the real-time video of dentition from a camera registers the at least one dental restoration to an actual tooth surface as seen from the camera's field of view and as displayed in the camera's field of view at the position, size and orientation of the actual tooth surface.

8. The method of claim 1, wherein the at least one dental restoration is a crown, a bridge, or other prosthetic device.

9. The method of claim 1, wherein the 3D model is a surface 3D contour model or a surface 3D mesh, wherein the 3D model is generated from a 3D scanning device including a 3D intraoral camera or a volumetric x-ray dental imaging device including a dental CBCT x-ray volumetric device.

10. The method of claim 9, where obtaining (S610, S620, S630) a 3D model of at least a portion of dentition using the 3D intraoral camera comprises:
obtaining (S610) a plurality of color images of the portion of dentition including at least one selected tooth;
obtaining (S610) a plurality of patterned light images for the portion of dentition including the at least one selected tooth;
forming the 3D model (S630) of at least a portion of dentition from the plurality of color images and plurality of patterned light images; and
displaying, transmitting or storing the 3D model.

11. The method of claim 10, wherein obtaining (S610, S620, S630) a 3D model of at least a portion of dentition using the 3D intraoral camera comprises scanning a patient's dentition or a plaster model of dentition.

12. The method of claim 1, further comprising:
changing shape or color of the displayed dental restoration according to one or more operator instructions until the evaluation is positive; and
fabricating the displayed, reshaped dental restoration according to generated program instructions for machine fabrication.

13. The method of claim 1, further comprising interactive adjusting (S645) of tooth angle, positioning, shape and/or color of a proposed dental restoration.

14. The method of claim 13, wherein the adjustment (S645) is executed by using various on-line tools for interaction to adjust the shape, spatial and/or color characteristics of the proposed dental restoration; and preferably including automated utilities that reshape a virtual tooth using factors such as relative size of neighboring teeth, boundary dimensions guidelines, tooth height calculations, shaping and position along the mandibular or maxillary arch or axes of rotation.

15. The method of claim 2, wherein a proposed dental restoration is in the control of the patient and updated in real time as the patient moves and/or re-) orients a display device or as the patient moves and the display device is fixed while showing the video relative to the patient's dentition or prepared restoration site.

## Patentansprüche

1. Ein Verfahren zum Herstellen einer Zahnrestauration bzw. eines Zahnersatzes für eine Zahnstelle im Gebiss, wobei das Verfahren zumindest teilweise auf einem Computer ausgeführt wird und Folgendes aufweist:
a) Erhalten (S610, S620, S630) eines 3D-Modells mindestens eines Gebissteils einschließlich mindestens einer vorbereiteten Restaurationsstelle für mindestens einen ausgewählten Zahn;
b) Designen bzw. Konstruieren (S640) mindestens einer Zahnrestauration für die mindestens eine vorbereitete Restaurationsstelle des Gebisses unter Verwendung des 3D-Modells auf der Basis von CAD/CAM-Techniken;
c) Anzeigen (S650) eines Echtzeit-Videos des Gebisses einschließlich der mindestens einen vorbereiteten Restaurationsstelle, wobei eine Orientierung der vorbereiteten Restaurationsstelle von einem Patienten gesteuert wird;
d) Echtzeitmodifizieren (S660) des angezeigten Echtzeitvideos des Gebisses, das die mindestens eine vorbereitete Restaurationsstelle enthält, um die mindestens eine Zahnrestauration zu zeigen, die zu physischen Zähnen in dem Echtzeitvideo des Gebisses registriert bzw. entsprechend übereinander gelagert ist, um die mindestens eine vorbereitete Restaurationsstelle in dem modifizierten, angezeigten Echtzeitvideo des Gebisses zu ersetzen;
e) Auswerten (S680) eines Erscheinungsbildes bzw. einer Darstellung der mindestens einen Zahnrestauration, die zu physischen Zähnen in dem modifizierten angezeigten Echtzeitvideo des Gebisses registriert ist; und
f) Herstellen (S690) der angezeigten Zahnrestauration gemäß erzeugten Programmanweisungen für maschinelle Herstellung, wenn die Bewertung positiv ist.

2. Das Verfahren nach Anspruch 1, wobei die Bewertung durch den Patienten erfolgt (S670).

3. Das Verfahren nach Anspruch 1, das ferner Folgendes aufweist:
Umformen (S640) der angezeigten Zahnrestauration gemäß einer oder mehreren Bedieneranweisungen, wenn die Bewertung negativ ist; und
Wiederholen der Schritte c) bis f).

4. Das Verfahren nach Anspruch 1, wobei, wenn sich die Ausrichtung des angezeigten Echtzeitvideos des Gebisses ändert, das Erscheinungsbild der mindestens einen Zahnrestauration, die zu physischen Zähnen in dem Echtzeitvideo des Gebisses registriert ist, geändert wird, um hierzu zu passen.

5. Das Verfahren nach Anspruch 1, wobei das Echtzeitmodifizieren (S660) des angezeigten Echtzeitvideos des Gebisses Platzieren eines virtuellen Modells der mindestens einen Zahnrestauration in dem angezeigten Echtzeitvideo des Gebisses unter Verwendung eines Augmented-Reality-CAD/CAM-Algorithmus aufweist.

6. Das Verfahren nach Anspruch 1, wobei Anzeigen (S650) des Echtzeitvideos des Gebisses einschließlich der mindestens einen vorbereiteten Restaurationsstelle Verwenden mindestens einer Kamera zum Filmen des Gebisses und eines Monitors zum Anzeigen des modifizierten angezeigten Echtzeitvideos des Gebisses aufweist, wobei eine tragbare, persönliche Datenverarbeitungsvorrichtung mindestens eine Kamera und den Monitor aufweist, wobei die tragbare, persönliche Datenverarbeitungsvorrichtung einen tragbaren Computer, ein Smartphone, ein Smart-Computing-Gerät oder ein Tablet aufweist.

7. Das Verfahren nach Anspruch 6, wobei das Erscheinungsbild der mindestens einen Zahnrestauration, die in dem Echtzeitvideo des Gebisses von einer Kamera zu physischen Zähne registriert wird, die mindestens eine Zahnrestauration zu einer tatsächlichen Zahnoberfläche registriert bzw. übereinanderlegt, und zwar wie sie vom Sichtfeld der Kamera aus gesehen wird und wie sie im Sichtfeld der Kamera an der Position, Größe und Ausrichtung der tatsächlichen Zahnoberfläche angezeigt wird.

8. Das Verfahren nach Anspruch 1, wobei die mindestens eine Zahnrestauration eine Krone, eine Brücke oder eine andere prothetische Vorrichtung ist.

9. Das Verfahren nach Anspruch 1, wobei das 3D-Modell ein Oberflächen-3D-Konturmodell oder ein Oberflächen-3D-Netz ist, wobei das 3D-Modell von einer 3D-Scanvorrichtung einschließlich einer intraoralen 3D-Kamera oder einer volumetrischen dentalen Röntgenbildgebungsvorrichtung einschließlich einer dentalen CBCT-Röntgenvolumetrievorrichtung erzeugt wird.

10. Das Verfahren nach Anspruch 9, wobei Erhalten (S610, S620, S630) eines 3D-Modells von mindestens einem Teil des Gebisses unter Verwendung der 3D-Intraoralkamera Folgendes aufweist:
Erhalten (S610) einer Vielzahl von Farbbildern des Teils des Gebisses, der mindestens einen ausgewählten Zahn enthält;
Erhalten (S610) einer Vielzahl von Lichtmuster-Bildern für den Teil des Gebisses, der den mindestens einen ausgewählten Zahn enthält;
Bilden des 3D-Modells (S630) von mindestens einem Teil des Gebisses aus der Vielzahl von Farbbildern und aus der Vielzahl von Lichtmuster-Bildern; und
Darstellen, Übertragen oder Speichern des 3D-Modells.

11. Das Verfahren nach Anspruch 10, wobei das Erhalten (S610, S620, S630) eines 3D-Modells mindestens eines Teils des Gebisses unter Verwendung der intraoralen 3D-Kamera Scannen des Gebisses eines Patienten oder eines Gipsmodells des Gebisses aufweist.

12. Das Verfahren nach Anspruch 1, das ferner Folgendes aufweist:
Ändern von Form oder Farbe der angezeigten Zahnrestauration gemäß einer oder mehreren Bedieneranweisungen, bis die Bewertung positiv ist; und
Herstellen der angezeigten, umgeformten Zahnrestauration gemäß erzeugten Programmanweisungen für maschinelle Herstellung.

13. Das Verfahren nach Anspruch 1, das ferner interaktives Einstellen (S645) von Zahnwinkel, Positionierung, Form und/oder Farbe einer vorgeschlagenen Zahnrestauration aufweist.

14. Das Verfahren nach Anspruch 13, wobei die Anpassung (S645) unter Verwendung verschiedener On-line-Tools zur Interaktion ausgeführt wird, um die Form-, Raum- und/oder Farbeigenschaften der vorgeschlagenen Zahnrestauration anzupassen; und
die vorzugsweise automatisierte Utilities bzw. Dienstprogramme aufweisen, die einen virtuellen Zahn umformen, und zwar unter Verwendung von Faktoren wie relativer Größe von Nachbarzähnen, Grenzabmessungsrichtlinien, Zahnhöhenberechnungen, Formgebung und Position entlang des Unterkiefer- oder Oberkieferbogens oder von Rotationsachsen.

15. Das Verfahren nach Anspruch 2, wobei eine vorgeschlagene Zahnrestauration der Kontrolle des Patienten unterliegt und in Echtzeit aktualisiert wird, wenn sich der Patient bewegt und/oder eine Anzeigevorrichtung neu ausrichtet oder wenn sich der Patient bewegt und die Anzeigevorrichtung fixiert ist, während sie das Video relativ zum Gebiss des Patienten oder zur vorbereiteten Restaurationsstelle zeigt.

## Revendications

1. Procédé destiné à la fabrication d'une restauration dentaire pour un site dentaire dans une dentition, le procédé étant exécuté au moins en partie sur un ordinateur et comprenant :
a) l'obtention (S610, S620, S630) d'un modèle 3D d'au moins une partie de la dentition comportant au moins un site de restauration préparé pour au moins une dent sélectionnée ;
b) la conception (S640) d'au moins une restauration dentaire pour ledit au moins un site de restauration préparé de la dentition en utilisant le modèle 3D sur la base de techniques CAO/FAO ;
c) l'affichage (S650) d'une vidéo en temps réel de la dentition comportant ledit au moins un site de restauration préparé, une orientation du site de restauration préparé étant contrôlée par un patient ;
d) la modification en temps réel (S660) de la vidéo en temps réel affichée de la dentition comportant ledit au moins un site de restauration préparé pour montrer ladite au moins une restauration dentaire enregistrée sur des dents physiques dans la vidéo en temps réel de la dentition pour remplacer ledit au moins un site de restauration préparé dans la vidéo en temps réel affichée modifiée de la dentition ;
e) l'évaluation (S680) d'une apparence de ladite au moins une restauration dentaire enregistrée sur des dents physiques dans la vidéo en temps réel affichée modifiée de la dentition ; et
f) la fabrication (S690) de la restauration dentaire affichée conformément à des instructions de programme générées pour la fabrication par machine lorsque l'évaluation est positive.

2. Procédé selon la revendication 1, dans lequel l'évaluation est effectuée par le patient (S670).

3. Procédé selon la revendication 1, comprenant en outre
le remodelage (S640) de la restauration dentaire affichée conformément à une ou plusieurs instructions d'un opérateur lorsque l'évaluation est négative ; et
la répétition des étapes c) à f).

4. Procédé selon la revendication 1, dans lequel, lorsque l'orientation de la vidéo en temps réel affichée de la dentition change, l'apparence de ladite au moins une restauration dentaire enregistré sur des dents physiques dans la vidéo en temps réel de la dentition est modifiée pour correspondre.

5. Procédé selon la revendication 1, dans lequel la modification en temps réel (S660) de la vidéo en temps réel affichée de la dentition comprend le placement d'un modèle virtuel de ladite au moins une restauration dentaire dans la vidéo en temps réel affichée de la dentition en utilisant un algorithme CAO/FAO de réalité augmentée.

6. Procédé selon la revendication 1, dans lequel l'affichage (S650) d'une vidéo en temps réel de la dentition comportant ledit au moins un site de restauration préparé comprend l'utilisation d'au moins une caméra pour filmer la dentition et d'un moniteur pour afficher la vidéo en temps réel affichée modifiée de la dentition, dans lequel un dispositif informatique personnel portable comprend ladite au moins une caméra et le moniteur, dans lequel le dispositif informatique personnel portable comprend un ordinateur portable, un téléphone intelligent, un dispositif informatique intelligent ou une tablette.

7. Procédé selon la revendication 6, dans lequel l'aspect de ladite au moins une restauration dentaire enregistrée sur des dents physiques dans la vidéo en temps réel de la dentition à partir d'une caméra enregistre ladite au moins une restauration dentaire sur une surface dentaire réelle vue depuis le champ de vision de la caméra et telle qu'affichée dans le champ de vision de la caméra à l'emplacement, à la taille et à l'orientation de la surface réelle de la dent.

8. Procédé selon la revendication 1, dans lequel ladite au moins une restauration dentaire est une couronne, un bridge ou un autre dispositif prothétique.

9. Procédé selon la revendication 1, dans lequel le modèle 3D est un modèle de contour 3D de surface ou un maillage 3D de surface, dans lequel le modèle 3D est généré à partir d'un dispositif de balayage 3D comportant une caméra intra-orale 3D ou un dispositif d'imagerie dentaire à rayons X volumétrique comportant un dispositif volumétrique à rayons X CBCT dentaire.

10. Procédé selon la revendication 9, dans lequel l'obtention (S610, S620, S630) d'un modèle 3D d'au moins une partie de la dentition en utilisant la caméra intra-orale 3D comprend :
l'obtention (S610) d'une pluralité d'images en couleurs de la partie de la dentition comportant au moins une dent sélectionnée ;
l'obtention (S610) d'une pluralité d'images lumineuses à motifs pour la partie de la dentition comportant ladite au moins une dent sélectionnée ;
la formation du modèle 3D (S630) d'au moins une partie de la dentition à partir de la pluralité d'images en couleurs et de la pluralité d'images lumineuses à motifs ; et
l'affichage, la transmission ou le stockage du modèle 3D.

11. Procédé selon la revendication 10, dans lequel l'obtention (S610, S620, S630) d'un modèle 3D d'au moins une partie de la dentition en utilisant la caméra intra-orale 3D comprend le balayage d'une dentition d'un patient ou d'un modèle en plâtre de la dentition.

12. Procédé selon la revendication 1, comprenant en outre :
la modification de la forme ou de la couleur de la restauration dentaire affichée conformément à une ou plusieurs instructions d'opérateur jusqu'à ce que l'évaluation soit positive ; et
la fabrication de la restauration dentaire affichée, remodelée conformément à des instructions de programme générées pour la fabrication par machine.

13. Procédé selon la revendication 1, comprenant en outre le réglage interactif (S645) de l'angle, de l'emplacement, de la forme et/ou de la couleur de la dent d'une restauration dentaire proposée.

14. Procédé selon la revendication 13, dans lequel le réglage (S645) est effectué en utilisant divers outils en ligne pour régler les caractéristiques de forme, spatiales, et/ou de couleur de la restauration dentaire proposée ; et
comportant, de préférence, des outils automatisés qui reforment une dent virtuelle en utilisant des facteurs tels que la taille relative de dents voisines, des règles de dimensions limites, des calculs de hauteur de la dent, la formation et la position le long de l'arcade maxillaire ou mandibulaire eu des axes de rotation.

15. Procédé selon la revendication 2, dans lequel une restauration dentaire proposée est effectuée sous la commande du patient et mis à jour en temps réel lorsque le patient bouge et/ou réoriente un dispositif d'affichage ou lorsque le patient bouge et que le dispositif d'affichage est fixe tout en montrant la vidéo relative à la dentition du patient ou au site de restauration préparé.
